# EUROPEAN PATENT APPLICATION

(11) **EP 4 379 657 A1**
(43) Date of publication of application: **05.06.2024**
(21) Application number: 23192653.6
(22) Date of filing: 22.08.2023
(51) Int. Cl.: G06T 7/11, G06T 7/174

(54) **METHOD FOR DETECTING LESION AND LESION DETECTION PROGRAM**

(30) Priority: 29.11.2022 JP 2022190010
(71) Applicant: FUJITSU LIMITED, Kawasaki-shi, Kanagawa 211-8588 (JP)
(72) Inventor: TAKEBE, Hiroaki, Kawasaki-shi, Kanagawa, 211-8588 (JP); MIYAZAKI, Nobuhiro, Kawasaki-shi, Kanagawa, 211-8588 (JP); BABA, Kozo, Kawasaki-shi, Kanagawa, 211-8588 (JP); BABA, Takayuki, Kawasaki-shi, Kanagawa, 211-8588 (JP)
(74) Representative: Hoffmann Eitle

(57) **Abstract**

A method implemented by a computer for detecting a lesion, the method including: calculating, by using a first lesion detection process configured to detect a specific lesion region from three-dimensional volume data generated based on a plurality of tomographic images obtained by imaging an inside of a human body, a probability of being the specific lesion region for each of unit image areas included in each of the plurality of tomographic images; and executing, based on one tomographic image of the plurality of tomographic images and the probability calculated for each of the unit image areas included in the one tomographic image, a second lesion detection process configured to detect the specific lesion region from the one tomographic image.

## Description

### FIELD

The embodiments discussed herein are related to a method for detecting a lesion and a lesion detection program.

### BACKGROUND

Medical images obtained by computed tomography (CT), magnetic resonance imaging (MRI), and the like are widely used for diagnosis of various diseases. A doctor needs to interpret a large number of images in diagnostic imaging using medical images, which places a heavy burden on the doctor. Therefore, there has been a demand for a technique of supporting diagnostic work of a doctor in some way using a computer.

As an example of such a technique, there is a technique of detecting a lesion region from a medical image using a trained model generated through machine learning. For example, an image processing device has been proposed that executes a primary classification process for obtaining tomographic images in a plurality of different cross-sectional directions and identifying a type of a lesion in each pixel for each of the tomographic images using a discriminator generated by machine learning and evaluates a result of the primary classification process for the pixel common to each of the tomographic images. Furthermore, it has been proposed to extend use of a known convolutional neural network (CNN) to a 3D image to analyze and segmentalize a 2D image in a composite computing system that combines N different CNNs according to N different planes of a 3D image volume.

Examples of the related art include: Japanese Laid-open Patent Publication No. 2018-175217; and International Publication Pamphlet No. WO 2019/137997.

### SUMMARY

### TECHNICAL PROBLEM

Meanwhile, depending on a lesion shape, a lesion region may not be correctly detected according to a process in which two-dimensional tomographic images are used as an input to detect a lesion region by determining whether or not a specific lesion is present for each unit image area in a tomographic image. For example, in a case where a shape of an image of a lesion to be detected in a tomographic image is similar to a shape of an image of another lesion not to be detected in a tomographic image, a region of the former image may not be correctly detected as a lesion region.

In one aspect, an object of the embodiments is to provide a method for detecting a lesion and a lesion detection program capable of improving accuracy in lesion region detection from tomographic images.

### SOLUTION TO PROBLEM

According to an aspect of the embodiments, there is provided a method implemented by a computer for detecting a lesion, the method including: calculating, by using a first lesion detection process configured to detect a specific lesion region from three-dimensional volume data generated based on a plurality of tomographic images obtained by imaging an inside of a human body, a probability of being the specific lesion region for each of unit image areas included in each of the plurality of tomographic images; and executing, based on one tomographic image of the plurality of tomographic images and the probability calculated for each of the unit image areas included in the one tomographic image, a second lesion detection process configured to detect the specific lesion region from the one tomographic image.

### ADVANTAGEOUS EFFECTS OF INVENTION

In one aspect, the accuracy in lesion region detection from tomographic images improves.

### BRIEF DESCRIPTION OF DRAWINGS

FIG. 1 is a diagram illustrating an exemplary configuration and exemplary processing of a lesion detection device according to a first embodiment;
FIG. 2 is a diagram illustrating an exemplary configuration of a diagnosis support system according to a second embodiment;
FIG. 3 is a diagram illustrating an exemplary hardware configuration of the lesion detection device;
FIG. 4 is a diagram illustrating a first example of a machine learning model for detecting a lesion region;
FIG. 5 is a diagram illustrating an exemplary lesion shape;
FIG. 6 is a diagram illustrating an exemplary lesion shape in a tomographic image;
FIG. 7 is a diagram illustrating a second example of the machine learning model for detecting a lesion region;
FIG. 8 is a diagram illustrating an outline of a lesion detection process according to the second embodiment;
FIG. 9 is a diagram illustrating an outline of a training process of a 2D segmentation model according to the second embodiment;
FIG. 10 is a diagram illustrating an exemplary configuration of processing functions of a training processing device and the lesion detection device;
FIG. 11 is an exemplary flowchart illustrating a processing procedure of the training processing device;
FIG. 12 is an exemplary flowchart illustrating a processing procedure of the lesion detection device; and
FIG. 13 is a diagram illustrating an exemplary display image that presents a result of lesion region detection.

### DESCRIPTION OF EMBODIMENTS

Hereinafter, the embodiments will be described with reference to the drawings.

### [First Embodiment]

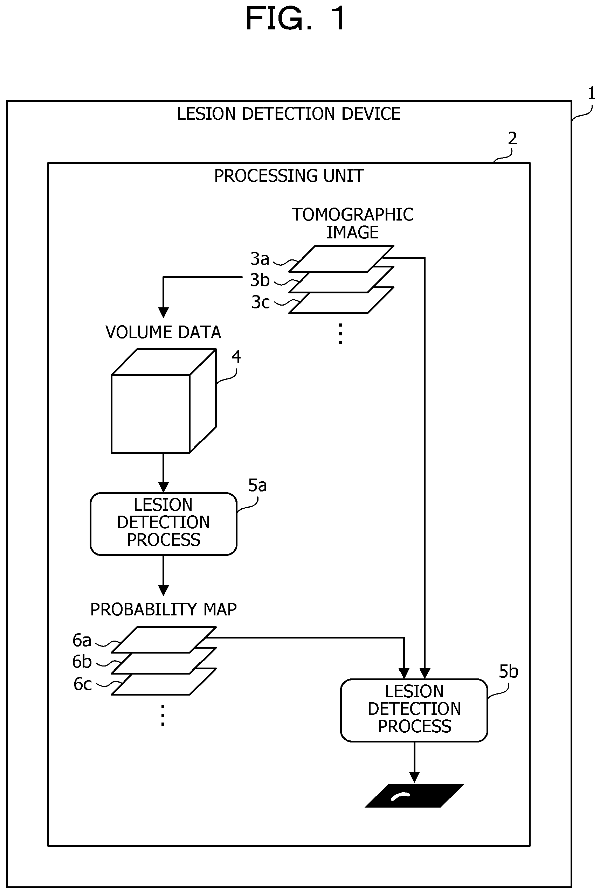

FIG. 1 is a diagram illustrating an exemplary configuration and exemplary processing of a lesion detection device according to a first embodiment. A lesion detection device 1 illustrated in FIG. 1 is a device that detects a region of a specific lesion (lesion region) from a medical image. The lesion detection device 1 includes a processing unit 2. The processing unit 2 is, for example, a processor. In this case, the following process performed by the processing unit 2 is implemented by, for example, the processor executing a predetermined program.

The processing unit 2 obtains, as medical images, a plurality of tomographic images 3a, 3b, 3c, and so on obtained by imaging the inside of a human body. The tomographic images 3a, 3b, 3c, and so on are, for example, tomographic images obtained by CT or MRI. Furthermore, the tomographic images 3a, 3b, 3c, and so on are images along a cross-section (slice plane) in the same direction in the inner region of the human body including a predetermined organ, for example, and may be obtained by performing imaging while changing a position with respect to a direction perpendicular to the cross-section at a predetermined interval (slice interval).

The processing unit 2 generates three-dimensional volume data 4 based on the tomographic images 3a, 3b, 3c, and so on. The processing unit 2 calculates a probability of being a lesion region for each unit image area included in each of the tomographic images 3a, 3b, 3c, and so on using a lesion detection process 5a for detecting the lesion region described above from the volume data 4. The lesion detection process 5a is what is called "3D segmentation" that detects a lesion region from volume data including image data of a three-dimensional space. Note that the unit image area is a detection unit of the lesion region in each of the tomographic images 3a, 3b, 3c, and so on, and is, for example, a pixel.

The probability for each unit image area is obtained from, for example, a processing result output in the middle of the lesion detection process 5a. For example, the lesion detection process 5a is executed by a machine learning model using a neural network. In this case, the probability of being a lesion region and the probability of not being a lesion region are output for each unit image area from the final layer (output layer) of the neural network. The processing unit 2 may obtain the former probability.

Next, the processing unit 2 executes a lesion detection process 5b for detecting a lesion region from each of the tomographic images 3a, 3b, 3c, and so on using each of the tomographic images 3a, 3b, 3c, and so on as a unit of processing. The lesion detection process 5b is executed when a tomographic image to be processed and a probability for each unit image area included in the tomographic image are input.

In FIG. 1, as an example, it is assumed that probability maps 6a, 6b, 6c, and so on are generated using the lesion detection process 5a. The probability maps 6a, 6b, 6c, and so on correspond to the tomographic images 3a, 3b, 3c, and so on, respectively, and a probability is mapped for each unit image area of the corresponding tomographic image in one probability map.

For example, in a case of detecting a lesion region from the tomographic image 3a, the processing unit 2 performs the lesion detection process 5b based on the tomographic image 3a and the probability map 6a corresponding to the tomographic image 3a. As a result, a lesion region is detected from the tomographic image 3a in units of unit image areas included in the tomographic image 3a.

Here, in a process of detecting a lesion region from a two-dimensional tomographic image (what is called "2D segmentation") using the tomographic image as an input, the lesion region may not be correctly detected depending on the lesion shape. For example, in a case where a shape of an image of a lesion to be detected in a tomographic image is similar to a shape of an image of another lesion not to be detected in a tomographic image, a region of the former image may not be correctly detected as a lesion region.

On the other hand, according to the 3D segmentation, it becomes possible to perform lesion detection in which a shape of a lesion region in a three-dimensional space is accurately captured as compared with the 2D segmentation. Thus, even in the case where shapes of images of a plurality of types of lesions are similar in the two-dimensional tomographic image as described above, erroneous detection of a lesion region is less likely to occur when three-dimensional shapes of the lesions are different.

However, according to the 3D segmentation, the slice interval of the tomographic images 3a, 3b, 3c, and so on, which are generation sources of volume data, may affect the accuracy in lesion detection. In other words, reliability of the shape of the lesion region in the generated volume data is lowered as the slice interval is longer, and the volume data may not accurately maintain the three-dimensional shape of the lesion region. As a result, the accuracy in lesion detection is lowered.

In an actual medical site, the number of tomographic images captured at a time may not be increased, and as a result thereof, the slice interval may not be shortened in some cases. Therefore, it may not be said that the accuracy in lesion detection based on the 3D segmentation is higher than the accuracy in lesion detection based on the 2D segmentation.

On the other hand, according to the lesion detection process 5b described above, the probability of being a lesion region determined by the lesion detection process 5a, which is the 3D segmentation, is used as input data in addition to the two-dimensional tomographic image. As a result, according to the lesion detection process 5b, the 2D segmentation is executed in consideration of not only the two-dimensional shape of the lesion region in the tomographic image but also the three-dimensional shape of the lesion region. Thus, according to the lesion detection process 5b, it becomes possible to accurately determine whether or not a region of the image is a region of the specific lesion even in the case where, for example, the two-dimensional shapes of the images of the plurality of types of lesions are similar. Therefore, it becomes possible to improve the accuracy in lesion region detection from tomographic images.

### [Second Embodiment]

Next, a system capable of detecting a lesion region of a liver from a CT image will be described.

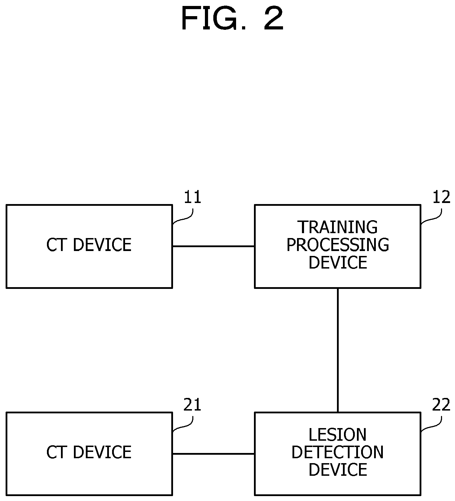

FIG. 2 is a diagram illustrating an exemplary configuration of a diagnosis support system according to a second embodiment. The diagnosis support system illustrated in FIG. 2 is a system for supporting diagnostic imaging based on CT imaging, and includes CT devices 11 and 21, a training processing device 12, and a lesion detection device 22. Note that the lesion detection device 22 is an example of the lesion detection device 1 illustrated in FIG. 1.

The CT devices 11 and 21 capture X-ray CT images of a human body. In the present embodiment, the CT devices 11 and 21 capture a predetermined number of tomographic images of axial planes in an abdominal region including the liver while changing a position (slice position) in a height direction of the human body (direction perpendicular to the axial planes) at predetermined intervals.

The lesion detection device 22 detects a lesion region from each of the tomographic images captured by the CT device 21. In the present embodiment, it is assumed that intrahepatic bile duct dilatation is detected as a lesion region. Furthermore, the lesion detection device 22 detects a lesion region using a lesion identification model generated through machine learning. Furthermore, the lesion detection device 22 causes a display device to display information indicating a result of the lesion region detection, for example. As a result, the lesion detection device 22 supports the diagnostic imaging performed by a user (e.g., radiologist).

The training processing device 12 generates the lesion region using a lesion identification model to be used by the lesion detection device 22 through machine learning. For this model generation process, the training processing device 12 generates training data from the individual tomographic images captured by the CT device 11, and carries out machine learning using the generated training data. Data (model parameters) indicating the lesion identification model generated by the training processing device 12 is read by the lesion detection device 22 via, for example, a network or a portable recording medium.

Note that the captured images may be input to the training processing device 12 and the lesion detection device 22 from the same CT device. Furthermore, the training processing device 12 may obtain the captured images from the CT device via a recording medium or the like instead of directly obtaining them. Moreover, the training processing device 12 and the lesion detection device 22 may be the same information processing device.

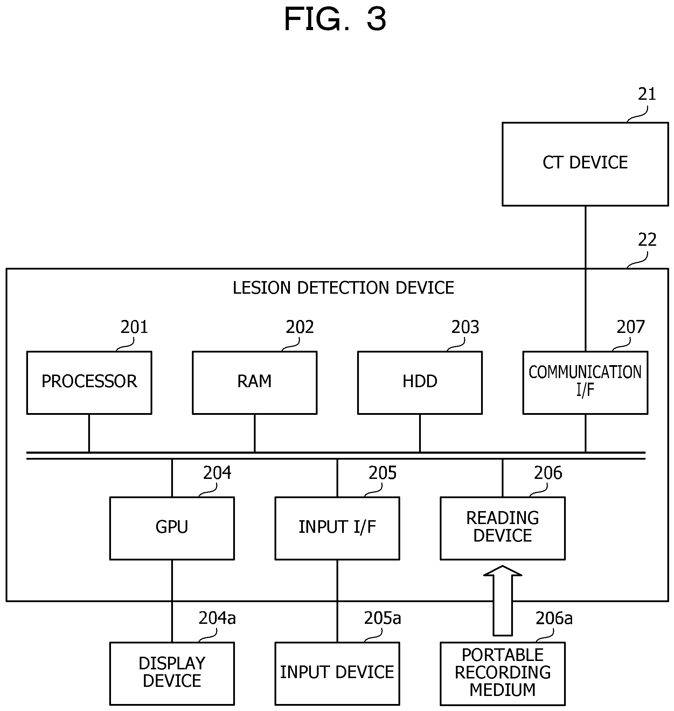

FIG. 3 is a diagram illustrating an exemplary hardware configuration of the lesion detection device. The lesion detection device 22 is implemented as, for example, a computer as illustrated in FIG. 3. As illustrated in FIG. 3, the lesion detection device 22 includes a processor 201, a random access memory (RAM) 202, a hard disk drive (HDD) 203, a graphics processing unit (GPU) 204, an input interface (I/F) 205, a reading device 206, and a communication interface (I/F) 207.

The processor 201 integrally controls the entire lesion detection device 22. The processor 201 is, for example, a central processing unit (CPU), a micro processing unit (MPU), a digital signal processor (DSP), an application specific integrated circuit (ASIC), or a programmable logic device (PLD). Furthermore, the processor 201 may be a combination of two or more elements of the CPU, MPU, DSP, ASIC, and PLD. Note that the processor 201 is an example of the processing unit 2 illustrated in FIG. 1.

The RAM 202 is used as a main storage device of the lesion detection device 22. The RAM 202 temporarily stores at least some of operating system (OS) programs and application programs to be executed by the processor 201. Furthermore, the RAM 202 stores various kinds of data needed for processing to be performed by the processor 201.

The HDD 203 is used as an auxiliary storage device of the lesion detection device 22 The HDD 203 stores the OS programs, the application programs, and various kinds of data. Note that another type of nonvolatile storage device, such as a solid state drive (SSD) or the like, may be used as the auxiliary storage device.

A display device 204a is coupled to the GPU 204. The GPU 204 displays an image on the display device 204a in accordance with an instruction from the processor 201. Examples of the display device 204a include a liquid crystal display, an organic electroluminescence (EL) display, and the like.

An input device 205a is coupled to the input interface 205. The input interface 205 transmits signals output from the input device 205a to the processor 201. Examples of the input device 205a include a keyboard, a pointing device, and the like. Examples of the pointing device include a mouse, a touch panel, a tablet, a touch pad, a track ball, and the like.

A portable recording medium 206a is attached to and detached from the reading device 206. The reading device 206 reads data recorded in the portable recording medium 206a, and transmits it to the processor 201. Examples of the portable recording medium 206a include an optical disk, a semiconductor memory, and the like.

The communication interface 207 exchanges data with another device such as the CT device 21 via a network.

The processing functions of the lesion detection device 22 may be implemented by the hardware configuration described above. Note that the training processing device 12 may also be implemented as a computer having a hardware configuration as illustrated in FIG. 3.

Meanwhile, a process of detecting a lesion region from medical images may be performed using, for example, a machine learning model.

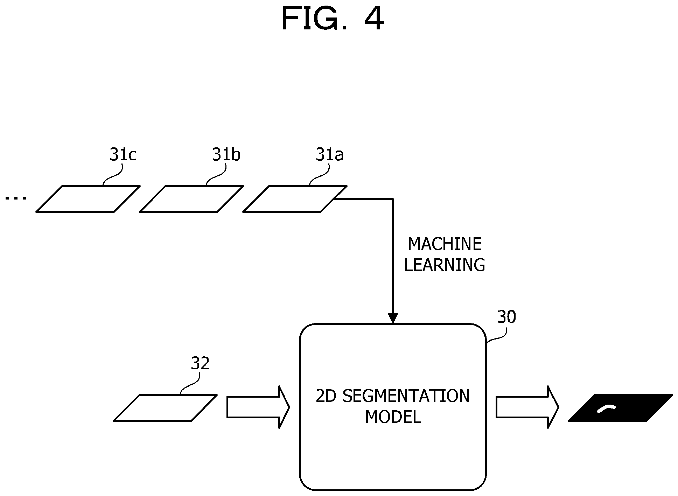

FIG. 4 is a diagram illustrating a first example of the machine learning model for detecting a lesion region. A 2D segmentation model 30 illustrated in FIG. 4 is a trained model that classifies, when a tomographic image 32 is input, whether or not each pixel of the tomographic image 32 is a specific lesion region. Here, the tomographic image 32 is assumed to be a tomographic image of an axial plane. Note that, since input data is a two-dimensional image, the 2D segmentation model 30 in FIG. 4 is illustrated with a name to which "2D" is added.

This 2D segmentation model 30 is generated through machine learning (e.g., deep learning) using, as training data, tomographic images 31a, 31b, 31c, and so on of axial planes in the same manner. A label indicating whether or not each pixel is a lesion region is added to those tomographic images 31a, 31b, 31c, and so on, and those labels are used as ground truth data at the time of the machine learning.

The lesion detection using such 2D segmentation model 30 has a problem that accuracy in detecting a lesion having a shape not three-dimensionally along the plane of the tomographic image is low while a lesion having a shape along the plane of the tomographic image may be detected with relatively high accuracy. For example, in a case where a tubular lesion, such as the intrahepatic bile duct dilatation, is not along the plane of the tomographic image, the lesion is projected as a circular shape or an elliptical shape in the tomographic image, which makes it difficult to distinguish the lesion from a spherical lesion such as a tumor.

In other words, at the time of training the 2D segmentation model 30 for detecting a tubular lesion, a lesion present in a circular shape or an elliptical shape in the tomographic image is trained as non-ground truth (Not). Thus, at the time of inference using the 2D segmentation model 30, a lesion in a circular shape or an elliptical shape in the tomographic image may not be determined as a lesion even if it is three-dimensionally tubular.

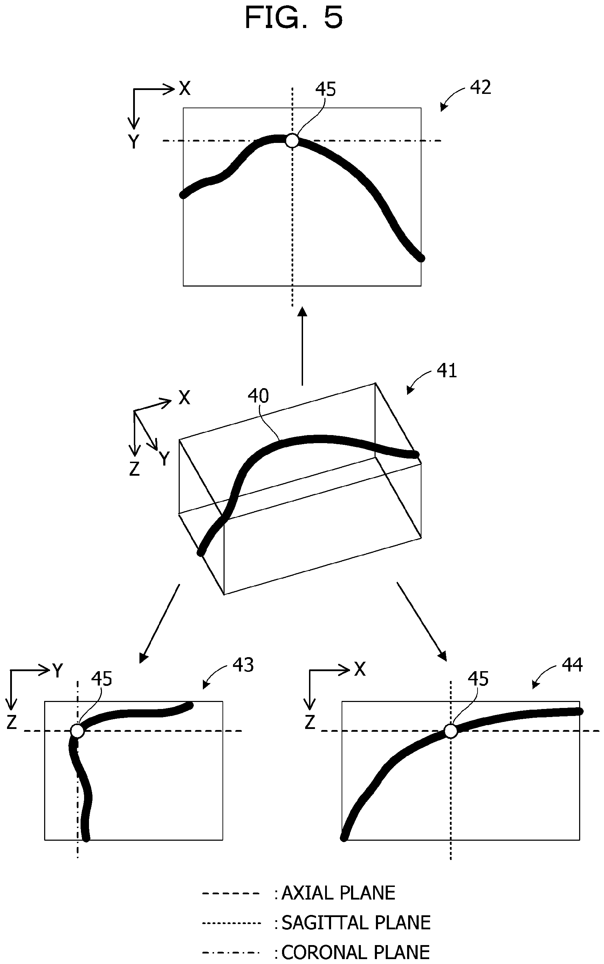

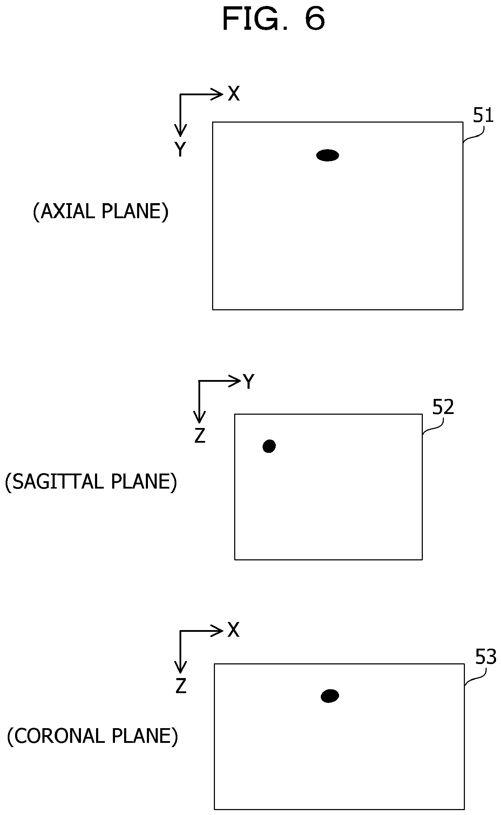

FIG. 5 is a diagram illustrating an exemplary lesion shape. Furthermore, FIG. 6 is a diagram illustrating an exemplary lesion shape in a tomographic image.

In the example of FIG. 5, as illustrated in a perspective view 41, a tubular lesion region 40 is present in a three-dimensional space based on an X-axis, a Y-axis, and a Z-axis. Furthermore, an image 42 is an image when the lesion region 40 is viewed from the upper side of the human body (viewed in the Z-axis direction). An image 43 is an image when the lesion region 40 is viewed from the left side of the human body (viewed in the X-axis direction). An image 44 is an image when the lesion region 40 is viewed from the front side of the human body (viewed in the direction opposite to the Y-axis direction).

Tomographic images 51, 52, and 53 illustrated in FIG. 6 indicate tomographic images of an axial plane, a sagittal plane, and a coronal plane, respectively, passing through a three-dimensional position 45 in the lesion region 40. At the three-dimensional position 45, the lesion region 40 is not along any of the axial plane, the sagittal plane, and the coronal plane. Thus, the lesion region is not present in a tubular shape in any of the tomographic images 51 to 53, but is present in a circular shape or an elliptical shape.

In a case where the 2D segmentation model 30 described above is trained using the tomographic images of axial planes, the inference is carried out using the tomographic images of the axial planes. Likewise, in a case of being trained using the tomographic images of sagittal planes, the inference is carried out using the tomographic images of the sagittal planes, and in a case of being trained using coronal planes, the inference is carried out using the tomographic images of the coronal planes. However, it is highly likely that the region of the three-dimensional position 45 described above is not determined as a tubular lesion from any tomographic image of the axial plane, sagittal plane, and coronal plane.

Furthermore, even in a case where the lesion region is along one of the tomographic images of the axial plane, sagittal plane, and coronal plane, the lesion is present in a circular shape or an elliptical shape in the other two tomographic images. Thus, even in the case where any of the tomographic images of the axial plane, sagittal plane, and coronal plane is used at the time of training and inference, the region of the tubular lesion may not be correctly determined as a lesion.

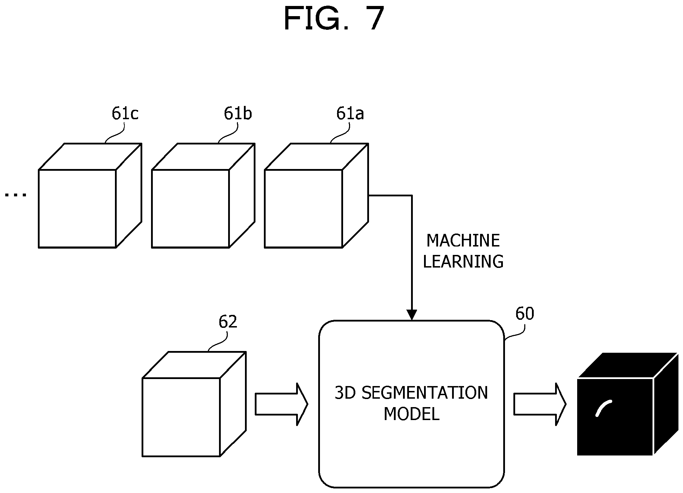

As an exemplary method for solving such a problem, the following method illustrated in FIG. 7 may be considered.

FIG. 7 is a diagram illustrating a second example of the machine learning model for detecting a lesion region. The lesion detection device 22 is capable of generating three-dimensional volume data based on a plurality of tomographic images (tomographic image set) captured while changing the slice position with the CT device 21. A 3D segmentation model 60 illustrated in FIG. 7 is a trained model that classifies, when such volume data 62 is input, whether or not each voxel of the volume data 62 is a specific lesion region. Note that, since input data is image data of the three-dimensional space, the 3D segmentation model 60 in FIG. 7 is illustrated with a name to which "3D" is added.

This 3D segmentation model 60 is generated through machine learning (e.g., deep learning) using, as training data, pieces of volume data 61a, 61b, 61c, and so on. A label indicating whether or not each voxel is a lesion region is added to those pieces of volume data 61a, 61b, 61c, and so on, and those labels are used as ground truth data at the time of machine learning.

By using such a 3D segmentation model 60, it becomes possible to perform the lesion detection in which the shape of the lesion region 40 in the three-dimensional space is accurately captured as compared with the case of using the 2D segmentation model 30 described above. Thus, it is highly likely that only a region of a tubular lesion is detected, and is less likely that a region of a lesion having another shape, such as a spherical shape, is erroneously detected.

However, in the case of using the 3D segmentation model 60, the slice interval of the tomographic image set, which is the generation source of the volume data to be used at the time of training and inference, may affect the accuracy in lesion detection. For example, when the slice interval between the tomographic images is larger than the pixel size of each tomographic image included in the tomographic image set, voxel data between the tomographic images is calculated through an interpolation operation at the time of generating the volume data. As an example, in a case of using the tomographic image of the axial plane (X-Y plane), the interpolation operation in the vertical direction (Z-axis direction) is performed. Thus, reliability of the shape of the lesion region in the volume data in the Z-axis direction is lowered as the slice interval is longer, and the volume data may not accurately maintain the three-dimensional shape of the lesion region.

Therefore, at the time of training the 3D segmentation model 60, the 3D segmentation model 60 with higher lesion detection accuracy may be generated as the volume data based on the tomographic image set with shorter slice intervals is used as the training data. On the other hand, at the time of inference using the 3D segmentation model 60, the accuracy in lesion detection may be lowered when the volume data based on the tomographic image set with a longer slice interval than that at the time of training is input to the 3D segmentation model 60.

In an actual medical site, the number of tomographic images captured at a time may not be increased. Thus, the slice interval of the tomographic image set used at the time of inference using the 3D segmentation model 60 may be longer than the slice interval of the tomographic image set used at the time of training the 3D segmentation model 60. In this case, the accuracy in inference using the 3D segmentation model 60 is lowered. From such a viewpoint, it may not be said that the accuracy in lesion detection based on the 3D segmentation model 60 is higher than that of the 2D segmentation model 30.

Therefore, the lesion detection device 22 according to the present embodiment supplementarily uses a result of the process using the 3D segmentation model 60 for a segmentation process using a two-dimensional image, thereby improving the accuracy in lesion detection.

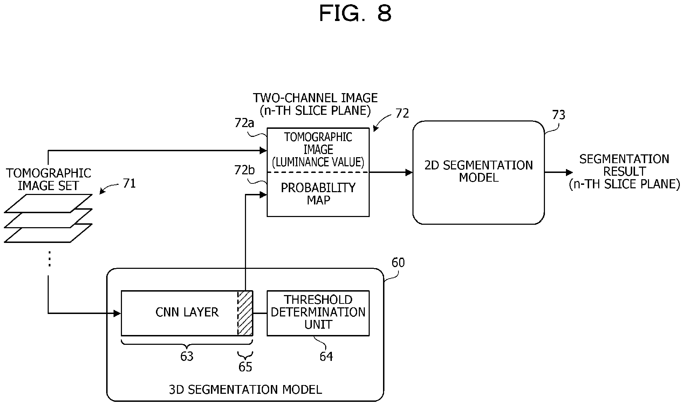

FIG. 8 is a diagram illustrating an outline of the lesion detection process according to the second embodiment.

The lesion detection device 22 first generates three-dimensional volume data based on a tomographic image set 71 including a plurality of tomographic images captured by the CT device 21, and inputs the generated volume data to the 3D segmentation model 60. Here, the 3D segmentation model 60 includes a neural network layer and a threshold determination unit 64. In FIG. 8, a CNN layer 63 is illustrated as an example of the neural network layer.

When the volume data is input, the CNN layer 63 outputs, from an output layer 65 that is the final layer of the CNN layer 63, a probability of being a lesion region and a probability of not being a lesion region for each pixel of each of the tomographic images. For example, the threshold determination unit 64 compares the probability of being a lesion region output from the output layer 65 with a predetermined threshold, and determines that the corresponding pixel is a lesion region when the probability is equal to or higher than the threshold.

The lesion detection device 22 obtains the probability of being a lesion region output from the output layer 65. The probability to be obtained takes a value of equal to or larger than 0 and equal to or smaller than 1. The lesion detection device 22 generates a two-channel image corresponding to each tomographic image based on each tomographic image included in the tomographic image set 71 and the probability for each pixel of each tomographic image. The two-channel image is data in which a pixel value (e.g., luminance value) of a tomographic image is associated with a probability for each pixel of the corresponding tomographic image.

FIG. 8 exemplifies a process related to a tomographic image 72a corresponding to the n-th slice plane among the tomographic images included in the tomographic image set 71. The tomographic image 72a has a luminance value for each pixel. Furthermore, it is assumed that the probability obtained from the output layer 65 is handled as a "probability map" in FIG. 8. A probability map 72b illustrated in FIG. 8 is data in which a probability is mapped for each pixel of the tomographic image 72a. In the example of FIG. 8, the lesion detection device 22 combines the tomographic image 72a and the probability map 72b, thereby generating a two-channel image 72 corresponding to the n-th slice plane.

The lesion detection device 22 inputs such a two-channel image 72 to a 2D segmentation model 73. The 2D segmentation model 73 is a machine learning model trained to determine, when a two-channel image in which a luminance value is associated with a probability for each pixel of a tomographic image is input, whether or not each pixel of the tomographic image is a lesion region and output a segmentation result of the tomographic image. Therefore, when the two-channel image 72 is input to the 2D segmentation model 73, a lesion region is detected from the tomographic image corresponding to the n-th slice plane.

According to the lesion detection process based on the 2D segmentation model 73 described above, the probability of being a lesion region determined using the 3D segmentation model 60 is used as input data in addition to the two-dimensional tomographic image. As a result, according to this lesion detection process, the 2D segmentation is executed in consideration of not only the two-dimensional shape of the lesion region in the tomographic image but also the three-dimensional shape of the lesion region.

Thus, as compared with a case where only two-dimensional tomographic images are used as input data, there is a higher possibility that a region of a tubular lesion may be detected separately from a region of a lesion having another shape, such as a spherical shape. In other words, the possibility that the region of the spherical lesion, such as a tumor, is erroneously detected as a region of a tubular legion, such as intrahepatic bile duct dilatation, is reduced. Therefore, it becomes possible to improve the accuracy in lesion region detection from tomographic images.

Note that, regarding the 3D segmentation model 60, output data of the threshold determination unit 64 is not used, and only output data of the output layer 65 of the CNN layer 63 is used as described above. Thus, it is sufficient if at least the arithmetic processing in the CNN layer 63 is executed in the process using the 3D segmentation model 60.

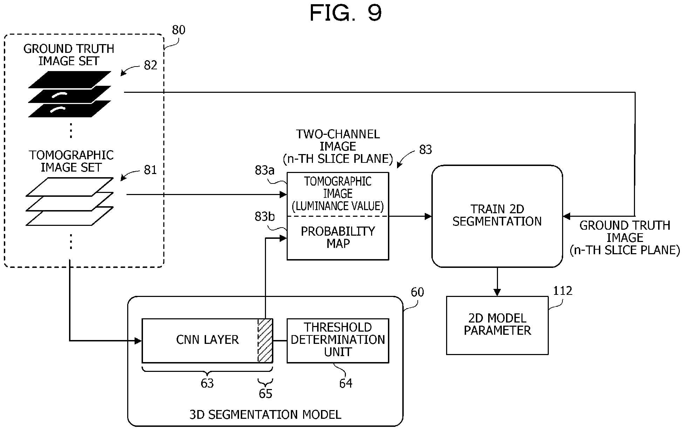

FIG. 9 is a diagram illustrating an outline of a training process of the 2D segmentation model according to the second embodiment. The 2D segmentation model 73 illustrated in FIG. 8 is generated through, for example, the following training process.

In the training process, a plurality of tomographic images (tomographic image set) captured by the CT device 11 is prepared as training data. Each of the tomographic images is an annotated image, and a ground truth label indicating whether or not it is a lesion region is associated with each pixel. Training data 80 exemplified in FIG. 9 includes a tomographic image set 81 and a ground truth image set 82. The ground truth image set 82 includes a plurality of ground truth images, and the individual ground truth images are associated with the individual tomographic images included in the tomographic image set 81. The ground truth label is mapped for each pixel in the ground truth image. Note that, in practice, a plurality of sets of the training data 80 including the tomographic image set 81 and the ground truth image set 82 is prepared to perform the training process.

The training processing device 12 generates three-dimensional volume data based on the tomographic image set 81, and inputs the generated volume data to the 3D segmentation model 60. The training processing device 12 obtains, from the output layer 65 of the 3D segmentation model 60, a probability for each pixel of each tomographic image included in the tomographic image set 81. Then, the training processing device 12 generates a two-channel image corresponding to each tomographic image based on each tomographic image included in the tomographic image set 81 and the probability for each pixel of each tomographic image. In FIG. 9, as an example, a tomographic image 83a and a probability map 83b corresponding to the n-th slice plane are combined to generate a two-channel image 83 corresponding to this slice plane, in a similar manner to FIG. 8.

In this manner, two-channel images corresponding to the individual tomographic images included in the training data 80 are generated. The training processing device 12 carries out machine learning using the individual two-channel images as input data and using the ground truth images corresponding to the individual two-channel images as ground truth data, and generates the 2D segmentation model 73 (see FIG. 8) that detects a lesion region from the input two-channel images. In practice, 2D model parameters 112, which are data for forming the 2D segmentation model 73, are generated. The 2D model parameters 112 include weighting factors between nodes in the neural network.

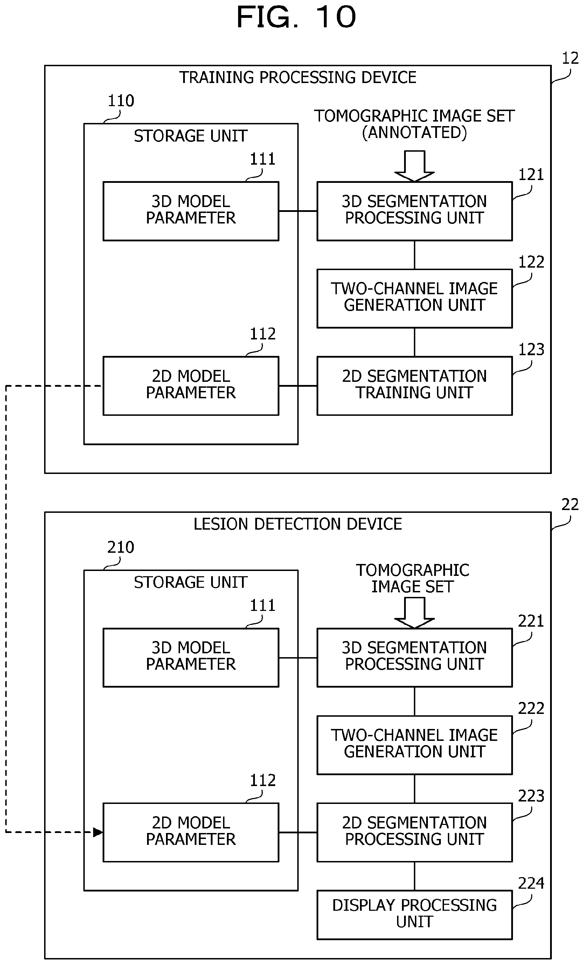

FIG. 10 is a diagram illustrating an exemplary configuration of processing functions of the training processing device and the lesion detection device.

The training processing device 12 includes a storage unit 110, a 3D segmentation processing unit 121, a two-channel image generation unit 122, and a 2D segmentation training unit 123.

The storage unit 110 is a storage area secured in a storage device included in the training processing device 12. The storage unit 110 stores 3D model parameters 111 and the 2D model parameters 112. The 3D model parameters 111 are data for forming the 3D segmentation model 60, and mainly includes weighting factors. The 2D model parameters 112 are data for forming the 2D segmentation model 73, and mainly includes weighting factors. The 2D model parameters 112 are generated by the 2D segmentation training unit 123, and are stored in the storage unit 110.

Processing of the 3D segmentation processing unit 121, the two-channel image generation unit 122, and the 2D segmentation training unit 123 is implemented by, for example, a processor included in the training processing device 12 executing an application program.

The 3D segmentation processing unit 121 generates volume data based on the tomographic image set prepared as training data. The 3D segmentation processing unit 121 inputs the volume data to the 3D segmentation model 60 based on the 3D model parameters 111, and performs the lesion detection process. The 3D segmentation processing unit 121 outputs the probability of being a lesion region for each pixel of each tomographic image from the output layer of the neural network included in the 3D segmentation model 60.

The two-channel image generation unit 122 generates a two-channel image using a pixel value (luminance value) of each pixel of the tomographic images and the probability of each pixel output from the 3D segmentation processing unit 121. Through the process of the 3D segmentation processing unit 121 and the two-channel image generation unit 122 described above, the input data for generating the 2D segmentation model 73 through machine learning is generated.

The 2D segmentation training unit 123 carries out machine learning using the two-channel images corresponding to the individual tomographic images included in the training data as input data and using the ground truth images corresponding to the individual two-channel images as ground truth data. The 2D segmentation model 73 is generated through this machine learning, and the 2D segmentation training unit 123 stores the 2D model parameters 112 corresponding to the generated 2D segmentation model 73 in the storage unit 110.

The lesion detection device 22 includes a storage unit 210, a 3D segmentation processing unit 221, a two-channel image generation unit 222, a 2D segmentation processing unit 223, and a display processing unit 224.

The storage unit 210 is a storage area secured in a storage device included in the lesion detection device 22, such as the RAM 202, the HDD 203, or the like. The storage unit 210 stores the 3D model parameters 111 and the 2D model parameters 112. The 3D model parameters 111 is data for forming the 3D segmentation model 60, and is the same as the 3D model parameters 111 stored in the storage unit 110 of the training processing device 12. The 2D model parameters 112 is data for forming the 2D segmentation model 73, which is input to the lesion detection device 22 from the training processing device 12 via a network, a portable recording medium, or the like, and is stored in the storage unit 210.

Processing of the 3D segmentation processing unit 221, the two-channel image generation unit 222, the 2D segmentation processing unit 223, and the display processing unit 224 is implemented by, for example, the processor 201 executing an application program.

The 3D segmentation processing unit 221 generates volume data based on a tomographic image set including a plurality of tomographic images captured by the CT device 21. The 3D segmentation processing unit 221 inputs the volume data to the 3D segmentation model 60 based on the 3D model parameters 111, and performs the lesion detection process. The 3D segmentation processing unit 221 outputs the probability of being a lesion region for each pixel of each tomographic image from the output layer of the neural network included in the 3D segmentation model 60.

The two-channel image generation unit 222 generates a two-channel image using a pixel value (luminance value) of each pixel of the tomographic images and the probability of each pixel output from the 3D segmentation processing unit 221.

The 2D segmentation processing unit 223 inputs the generated two-channel image to the 2D segmentation model 73 based on the 2D model parameters 112, thereby executing the lesion detection process.

The display processing unit 224 generates a display image indicating a result of the lesion detection by the 2D segmentation processing unit 223, and causes the display device 204a to display the display image.

Next, processing of the training processing device 12 and the lesion detection device 22 will be described using a flowchart.

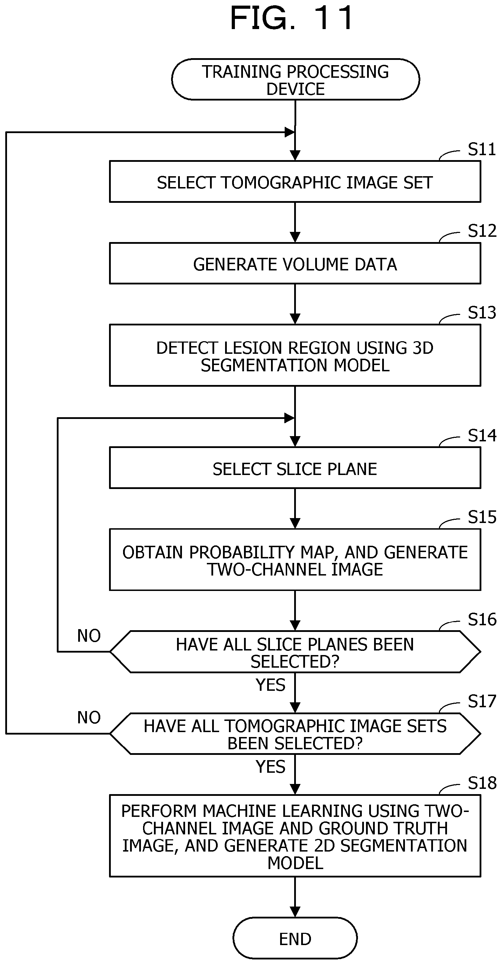

FIG. 11 is an exemplary flowchart illustrating a processing procedure of the training processing device.

[Step S11] The 3D segmentation processing unit 121 selects one tomographic image set prepared as training data.

[Step S12] The 3D segmentation processing unit 121 generates volume data based on the selected tomographic image set.

[Step S13] The 3D segmentation processing unit 121 executes the process of detecting a lesion region from the volume data using the 3D segmentation model 60 based on the 3D model parameters 111. The 3D segmentation processing unit 121 outputs the probability of being a lesion region for each pixel of each tomographic image from the output layer of the neural network included in the 3D segmentation model 60, generates probability maps corresponding to the individual tomographic images, and stores them in a storage area such as a RAM.

[Step S14] The two-channel image generation unit 122 selects one slice plane.

[Step S15] The two-channel image generation unit 122 obtains a probability map corresponding to the selected slice plane from the probability maps stored in the storage area in step S13. The two-channel image generation unit 122 combines the tomographic image (luminance value image) corresponding to the selected slice plane and the obtained probability map to generate a two-channel image corresponding to the selected slice plane.

[Step S16] The two-channel image generation unit 122 determines whether all the slice planes have been selected. If there are unselected slice planes, the process proceeds to step S14, and one of the unselected slice planes is selected. On the other hand, if all the slice planes have been selected, the process proceeds to step S17.

[Step S17] The 3D segmentation processing unit 121 determines whether all the tomographic image sets prepared as training data have been selected. If there are unselected tomographic image sets, the process proceeds to step S11, and one of the unselected tomographic image sets is selected. On the other hand, if all the tomographic image sets have been selected, the process proceeds to step S18.

[Step S18] The 2D segmentation training unit 123 carries out machine learning using each of the generated two-channel images as input data and using ground truth images corresponding to the individual two-channel images as ground truth data. The 2D segmentation model 73 is generated through this machine learning, and the 2D segmentation training unit 123 stores the 2D model parameters 112 corresponding to the generated 2D segmentation model 73 in the storage unit 110.

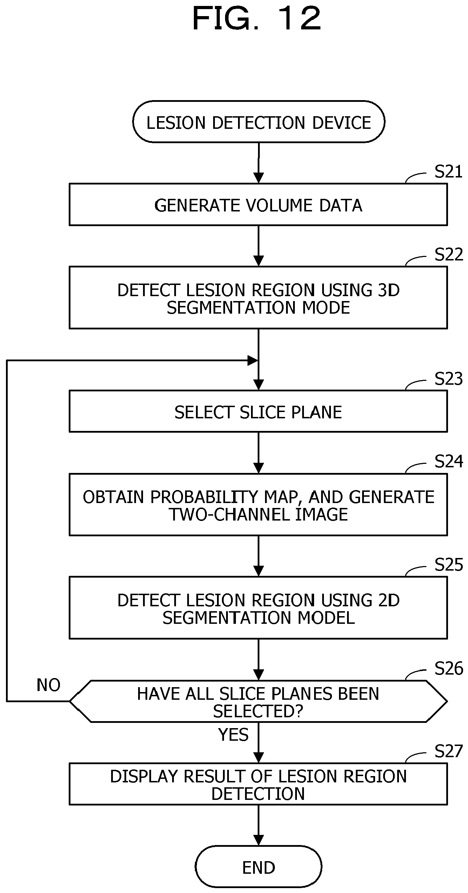

FIG. 12 is an exemplary flowchart illustrating a processing procedure of the lesion detection device.

[Step S21] The 3D segmentation processing unit 221 generates volume data based on a tomographic image set including a plurality of tomographic images captured by the CT device 21.

[Step S22] The 3D segmentation processing unit 221 executes the process of detecting a lesion region from the volume data using the 3D segmentation model 60 based on the 3D model parameters 111. The 3D segmentation processing unit 221 outputs the probability of being a lesion region for each pixel of each tomographic image from the output layer of the neural network included in the 3D segmentation model 60, generates probability maps corresponding to the individual tomographic images, and stores them in a storage area such as the RAM 202.

[Step S23] The two-channel image generation unit 222 selects one slice plane.

[Step S24] The two-channel image generation unit 222 obtains a probability map corresponding to the selected slice plane from the probability maps stored in the storage area in step S22. The two-channel image generation unit 222 combines the tomographic image (luminance value image) corresponding to the selected slice plane and the obtained probability map to generate a two-channel image corresponding to the selected slice plane.

[Step S25] The 2D segmentation processing unit 223 inputs the generated two-channel image to the 2D segmentation model 73 based on the 2D model parameters 112, thereby executing the process of detecting a lesion region from the tomographic image corresponding to the two-channel image. As a result, it is determined whether or not each pixel of the tomographic image corresponding to the two-channel image is a lesion region.

[Step S26] The two-channel image generation unit 222 determines whether all the slice planes have been selected. If there are unselected slice planes, the process proceeds to step S23, and one of the unselected slice planes is selected. On the other hand, if all the slice planes have been selected, the process proceeds to step S27.

[Step S27] The display processing unit 224 generates a display image indicating a result of the lesion region detection by the 2D segmentation processing unit 223, and causes the display device 204a to display the display image.

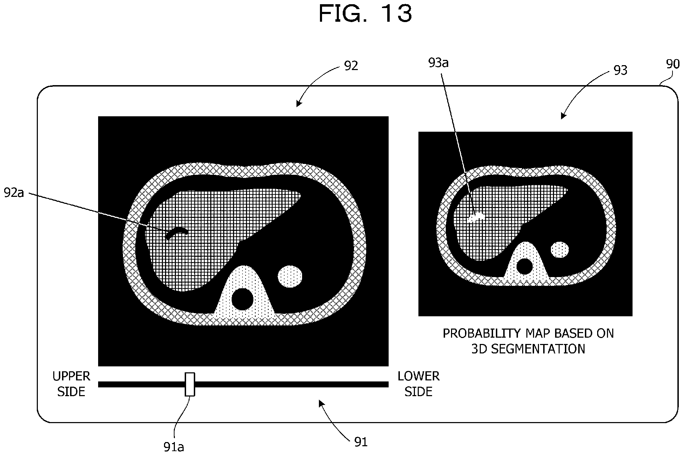

FIG. 13 is a diagram illustrating an exemplary display image that presents a result of the lesion region detection. The lesion detection device 22 is capable of outputting information indicating a result of the lesion region detection based on the processing result of the 2D segmentation processing unit 223. For example, the display processing unit 224 is capable of generating a result display image 90 as illustrated in FIG. 13 and causing the display device 204a to display it. The result display image 90 includes a slice selection portion 91, a lesion region display portion 92, and a probability map display portion 93.

In the slice selection portion 91, a slice plane of a tomographic image displayed in the lesion region display portion 92 may be selected by moving a handle 91a on a slider. The tomographic image corresponding to the slice plane selected in the slice selection portion 91 is displayed in the lesion region display portion 92. In this tomographic image, a lesion region 92a is superimposed and displayed based on the result of the processing of the 2D segmentation processing unit 223 performed on the same slice plane.

The tomographic image same as that of the lesion region display portion 92 is displayed in the probability map display portion 93. Furthermore, in a lesion region 93a in this tomographic image, information regarding the probability map corresponding to the selected slice plane is superimposed and displayed. For example, each pixel in the lesion region 93a is displayed with brightness according to the probability value in the probability map using a color different from that of the tomographic image.

By visually recognizing the result display image 90 as described above, the user (radiologist) is enabled to check the final result of the lesion region detection and the probability in the detected lesion region in comparison. As a result, the user is enabled to determine the reliability of the result of the lesion region detection, for example.

Note that, although the probability takes a value of equal to or larger than 0 and equal to or smaller than 1 in the second embodiment above, the probability value may be 0 or 1 as another example. In this case, for example, the lesion detection device 22 may obtain the probability based on the segmentation result of each pixel by the threshold determination unit 64 of the 3D segmentation model 60. In other words, the probability is 1 when the pixel is determined to be a lesion region, and the probability is 0 when the pixel is not determined to be a lesion region. Even in the case where such a probability is used, the three-dimensional shape of the lesion is considered in the lesion detection process using the 2D segmentation model 73 so that the effect of improving the accuracy in lesion detection may be obtained.

However, by using values other than 0 and 1 as probabilities as in the second embodiment described above, it becomes possible to finely reflect the determination result based on the three-dimensional shape of the lesion with respect to the lesion detection process using the 2D segmentation model 73. As a result, by using values other than 0 and 1 as probabilities, it becomes possible to enhance the accuracy in lesion detection.

Furthermore, in the second embodiment described above, a tomographic image and a probability of each pixel of the tomographic image are input to the 2D segmentation model 73. However, as another example, the 2D segmentation model 30 illustrated in FIG. 4 to which only the tomographic image is input may be used, and the determination result by the 2D segmentation model 30 may be corrected using the probability. For example, the probability that a pixel is a lesion region output from the output layer of the neural network included in the 2D segmentation model 30 is corrected by the probability corresponding to the pixel obtained from the 3D segmentation model 60. The former probability is corrected to a higher value as the latter probability is higher. Then, threshold determination is made using the corrected probability in the 2D segmentation model 30, and when the corrected probability is equal to or higher than a predetermined threshold, the corresponding pixel is determined to be a lesion region.

According to such a method, the lesion detection result based on the 2D segmentation model 30 is corrected by the lesion detection result based on the 3D segmentation model 60 in which the three-dimensional shape of the lesion is considered. Thus, the effect of improving the accuracy in lesion detection may be obtained. However, when the 2D segmentation model 73, which is trained using both of the probability and the pixel value for each pixel of the tomographic image as inputs, is used as in the second embodiment described above, it is more likely that the lesion detection appropriately reflecting the determination result based on the three-dimensional shape of the lesion may be executed. Thus, it becomes possible to further enhance the accuracy in lesion detection when the 2D segmentation model 73 is used.

Note that the processing functions of the devices (e.g., lesion detection devices 1 and 22 and training processing device 12) described in the individual embodiments above may be implemented by a computer. In that case, a program describing processing content of the functions to be implemented by the individual devices is provided, and the program is executed by the computer, whereby the processing functions described above are implemented in the computer. The program describing the processing content may be recorded in a computer-readable recording medium. Examples of the computer-readable recording medium include a magnetic storage device, an optical disk, a semiconductor memory, and the like. Examples of the magnetic storage device include a hard disk drive (HDD), a magnetic tape, and the like. Examples of the optical disk include a compact disc (CD), a digital versatile disc (DVD), a Blu-ray disc (BD, registered trademark), and the like.

In a case of distributing the program, for example, portable recording media in which the program is recorded, such as DVDs, CDs, and the like, are sold. Furthermore, it is also possible to store the program in a storage device of a server computer, and transfer the program from the server computer to another computer via a network.

The computer that executes the program stores, for example, the program recorded in the portable recording medium or the program transferred from the server computer in its own storage device. Then, the computer reads the program from its own storage device, and executes processing according to the program. Note that the computer may read the program directly from the portable recording medium and execute the processing according to the program. Furthermore, the computer may sequentially execute processing according to the received program each time the program is transferred from the server computer coupled via the network.

## Claims

1. A method implemented by a computer for detecting a lesion, the method comprising:
calculating, by using a first lesion detection process configured to detect a specific lesion region from three-dimensional volume data generated based on a plurality of tomographic images obtained by imaging an inside of a human body, a probability of being the specific lesion region for each of unit image areas included in each of the plurality of tomographic images; and
executing, based on one tomographic image of the plurality of tomographic images and the probability calculated for each of the unit image areas included in the one tomographic image, a second lesion detection process configured to detect the specific lesion region from the one tomographic image.

2. The method according to claim 1, wherein
the calculating includes obtaining the probability for each of the unit image areas from a processing result output during the first lesion detection process is executed.

3. The method according to claim 1, wherein
the calculating includes calculating the probability for each of the unit image areas by inputting the generated volume data to a first machine learning model configured to detect the specific lesion region from input volume data that has image data of a three-dimensional space.

4. The method according to claim 3, wherein
the first machine learning model includes a neural network, and
the probability for each of the unit image areas is output from an output layer of the neural network.

5. The method according to claim 1, wherein
the second lesion detection processing includes
detecting the specific lesion region from the one tomographic image by using a second machine learning model configured to output, when an input image that has image data of a two-dimensional space and the probability of being the specific lesion region that corresponds to each of the unit image areas included in the input image are input to the second machine learning model, information that indicates whether or not each of the unit image areas included in the input image is the specific lesion region.

6. A program for detecting a lesion, the program comprising instructions which when executed by a computer to perform processing comprising,
calculating, by using a first lesion detection process configured to detect a specific lesion region from three-dimensional volume data generated based on a plurality of tomographic images obtained by imaging an inside of a human body, a probability of being the specific lesion region for each of unit image areas included in each of the plurality of tomographic images; and
executing, based on one tomographic image of the plurality of tomographic images and the probability calculated for each of the unit image areas included in the one tomographic image, a second lesion detection process configured to detect the specific lesion region from the one tomographic image.
